(19) **Europäisches Patentamt / European Patent Office / Office européen des brevets**

(11) **EP 3 094 756 B1**

(12) **FASCICULE DE BREVET EUROPEEN**

(45) Date de publication et mention
de la délivrance du brevet:
**15.08.2018 Bulletin 2018/33**

(21) Numéro de dépôt: **14703437.5**

(22) Date de dépôt: **17.01.2014**

(51) Int Cl.:
*C22F 1/10* *(2006.01)*      *C22C 19/05* *(2006.01)*
*C21D 8/02* *(2006.01)*      *C22C 19/00* *(2006.01)*
*C22C 19/03* *(2006.01)*      *C22C 38/08* *(2006.01)*
*B21C 37/08* *(2006.01)*      *C21D 9/52* *(2006.01)*
*C22C 30/00* *(2006.01)*      *C22C 38/02* *(2006.01)*
*C22C 38/14* *(2006.01)*      *C22C 38/40* *(2006.01)*
*C22C 38/50* *(2006.01)*      *B23K 101/06* *(2006.01)*
*B23K 101/18* *(2006.01)*      *B23K 103/04* *(2006.01)*
*B23K 31/02* *(2006.01)*      *C21D 1/42* *(2006.01)*
*C22C 38/52* *(2006.01)*      *F16L 9/17* *(2006.01)*
*C22C 38/10* *(2006.01)*

(86) Numéro de dépôt international:
**PCT/IB2014/058350**

(87) Numéro de publication internationale:
**WO 2015/107393 (23.07.2015 Gazette 2015/29)**

(54) **PROCEDE DE FABRICATION D'UNE BANDE D' EPAISSEUR VARIABLE ET BANDE ASSOCIEE**

VERFAHREN ZUR HERSTELLUNG EINES BLECHES MIT VARIABLER DICKE UND EIN SOLCHES BLECH

PROCESS FOR PRODUCTION OF A VARIABLE THICKNESS SHEET AND SUCH A SHEET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**23.11.2016 Bulletin 2016/47**

(73) Titulaire: **Aperam**
**1882 Luxembourg (LU)**

(72) Inventeurs:
• **PANIER, Roland**
**F-58000 Nevers (FR)**

• **REYDET, Pierre-Louis**
**F-58130 Urzy (FR)**
• **LAURAIN, Nicolas**
**F-91640 Briis-sous-Forges (FR)**

(74) Mandataire: **Lavoix**
**2, place d'Estienne d'Orves**
**75441 Paris Cedex 09 (FR)**

(56) Documents cités:
**EP-A1- 0 081 432      WO-A2-2008/068352**
**DE-A1- 3 802 445      DE-C1- 19 933 113**

**Description**

La présente invention concerne un procédé de fabrication d'une bande d'épaisseur variable selon sa longueur, en alliage à base de fer.

Les Invar® cryogéniques, notamment l'Invar® M93, sont des alliages qui présentent de faibles coefficients de dilatation thermique, ce qui les rend notamment attractifs pour transporter des fluides cryogéniques.

Dans de telles applications, des éléments en Invar® cryogénique de différentes épaisseurs peuvent être assemblés, par exemple par soudure.

Les assemblages ainsi obtenus ne donnent pas entière satisfaction. En effet, les soudures constituent des zones affaiblies des structures formées par les éléments assemblés. La présence de ces zones affaiblies peut résulter en une diminution de la tenue en fatigue.

Un but de l'invention est de résoudre ce problème en proposant un procédé de fabrication d'une bande principalement à base de fer et de nickel qui permette de réaliser des structures renforcées d'un point de vue mécanique.

A cet effet, l'invention a pour objet un procédé de fabrication selon la revendication 1.

Selon des modes particuliers de réalisation, le procédé de fabrication présente l'une ou plusieurs des caractéristiques des revendications 2 à 11, prise(s) isolément ou selon toute(s) combinaison(s) techniquement possible(s).

L'invention a également pour objet un procédé de fabrication d'un flan selon la revendication 12 ou 13.

L'invention a également pour objet un procédé de fabrication d'un tronçon de tube cryogénique selon la revendication 14.

L'invention a également pour objet une bande d'épaisseur variable selon les revendications 15 à 17.

L'invention a ensuite pour objet un flan selon les revendications 18 à 20.

L'invention a également pour objet un tronçon de tube cryogénique selon les revendications 21 et 22.

L'invention a en outre pour objet un ensemble selon les revendications 23 à 25.

L'invention sera mieux comprise à la lecture de la description qui va suivre, donnée uniquement à titre d'exemple, et faite en se référant aux dessins annexés, sur lesquels :

- la figure 1 est une vue schématique en section longitudinale d'une bande initiale ;
- la figure 2 est une vue schématique en section longitudinale d'une bande intermédiaire ;
- la figure 3 est une vue schématique en section longitudinale d'une bande d'épaisseur variable ;
- la figure 4 est une représentation schématique d'un flan obtenu par le procédé de fabrication selon l'invention ;
- la figure 5 est une représentation schématique en section longitudinale d'un premier assemblage d'un flan avec une deuxième pièce ;
- la figure 6 est une représentation schématique en section longitudinale de deux flancs assemblés bout à bout ; et
- la figure 7 est une représentation schématique en coupe d'un tube cryogénique.

Un exemple de procédé de fabrication d'une bande d'épaisseur variable selon sa longueur en alliage principalement à base de fer et de nickel conforme à l'invention va maintenant être décrit.

Dans une première étape de ce procédé, on fournit une bande initiale 1 obtenue par laminage à chaud.

La bande initiale 1 est une bande en alliage de type Invar cryogénique. Cet alliage comprend en poids :

$34,5\% \leq Ni \leq 53,5\%$
$0,15\% \leq Mn \leq 1,5\%$
$0 \leq Si \leq 0,35\%$, de préférence $0,1\% \leq Si \leq 0,35\%$
$0 \leq C \leq 0,07\%$

optionnellement :

$0 \leq Co \leq 20\%$
$0 \leq Ti \leq 0,5\%$
$0,01\% \leq Cr \leq 0,5\%$

le reste étant du fer et des impuretés résultant nécessairement de l'élaboration.

Le silicium a notamment pour fonction de permettre la désoxydation et d'améliorer la résistance à la corrosion de l'alliage.

Un alliage de type Invar cryogénique est un alliage qui présente trois propriétés principales :

- Il est stable vis-à-vis de la transformation martensitique jusqu'au dessous de la température $T_L$ de liquéfaction d'un fluide cryogénique. Ce fluide cryogénique est par exemple du butane, du propane, du méthane, de l'azote ou de l'oxygène liquide. Les teneurs en éléments gammagènes, nickel (Ni), manganèse (Mn) et carbone (C), de l'alliage sont ajustées de façon à ce que la température de début de la transformation martensitique soit strictement inférieure à la température $T_L$ de liquéfaction du fluide cryogénique.

- Il présente un faible coefficient moyen de dilatation thermique entre la température ambiante et la température $T_L$ de liquéfaction du fluide cryogénique.
- Il ne présente pas de transition de résilience « ductile-fragile ».

L'alliage utilisé a de préférence :

- un coefficient moyen de dilatation thermique entre 20°C et 100°C inférieur ou égal à $10,5 \times 10^{-6}$ K$^{-1}$, en particulier inférieur ou égal à $2,5 \times 10^{-6}$ K$^{-1}$ ;
- un coefficient moyen de dilatation thermique entre -180°C et 0°C inférieur ou égal à $10 \times 10^{-6}$ K$^{-1}$, en particulier inférieur ou égal à $2 \times 10^{-6}$ K$^{-1}$ ; et
- une résilience supérieure ou égale à 100 joule/cm$^2$, en particulier supérieure ou égale à 150 joule/cm$^2$, à une température supérieure ou égale à -196°C.

De préférence, l'alliage utilisé présente la composition suivante, en % en poids :

$34,5 \leq$ Ni $\leq 42,5\%$
$0,15\% \leq$ Mn $\leq 0,5\%$
$0 \leq$ Si $\leq 0,35\%$, de préférence $0,1\% \leq$ Si $\leq 0,35\%$
$0,010\% \leq$ C $\leq 0,050\%$

optionnellement :

$0 \leq$ Co $\leq 20\%$
$0 \leq$ Ti $\leq 0,5\%$
$0,01\% \leq$ Crs $\leq 0,5\%$

le reste étant du fer et des impuretés résultant nécessairement de l'élaboration.
Dans ce cas, l'alliage utilisé a de préférence :

- un coefficient moyen de dilatation thermique entre 20°C et 100°C inférieur ou égal à $5,5 \times 10^{-6}$ K$^{-1}$ ;
- un coefficient moyen de dilatation thermique entre -180°C et 0°C inférieur ou égal à $5 \times 10^{-6}$ K$^{-1}$; et
- une résilience supérieure ou égale à 100 joule/cm$^2$, en particulier supérieure ou égale à 150 joule/cm$^2$, à une température supérieure ou égale à -196°C.

Encore plus particulièrement,

$35\% \leq$ Ni $\leq 36.5\%$
$0,2\% \leq$ Mn $\leq 0,4\%$
$0,02 \leq$ C $\leq 0,04\%$
$0,15 \leq$ Si $\leq 0,25\%$

optionnellement

$0 \leq$ Co $\leq 20\%$
$0 \leq$ Ti $\leq 0,5\%$
$0,01\% \leq$ Crs $\leq 0,5\%$

le reste étant du fer et des impuretés résultant nécessairement de l'élaboration.
Dans ce cas, l'alliage présente de préférence :

- un coefficient moyen de dilatation thermique entre 20°C et 100°C inférieur ou égal à $1,5 \times 10^{-6}$ K$^{-1}$ ;
- un coefficient moyen de dilatation thermique entre -180°C et 0°C inférieur ou égal à $2 \times 10^{-6}$ K$^{-1}$ ;
- une résilience supérieure ou égale à 200 joule/cm$^2$ à une température supérieure ou égale à -196°C.

Un tel alliage est un alliage de type Invar® cryogénique. Le nom commercial de cet alliage est invar®-M93.

De manière classique, les alliages utilisés sont élaborés en four à arc électrique ou en four sous vide à induction.

Après des opérations d'affinage en poche permettant de régler les teneurs en éléments d'alliage résiduels, les alliages sont coulés en demi-produits, lesquels sont transformés à chaud, en particulier par laminage à chaud, afin d'obtenir des bandes.

Ces demi-produits sont par exemple des lingots. En variante, il s'agit de brames coulées en continu au moyen d'une installation de coulée continue de brames.

La bande ainsi obtenue est décapée et polie en procédé continu afin de limiter ses défauts : calamine, pénétration oxydée, paille et inhomogénéité en épaisseur dans le sens de la longueur et de la largeur de la bande.

Le polissage est notamment réalisé au moyen de meules ou de papiers abrasifs. Une fonction du polissage est d'éliminer les résidus du décapage.

A l'issue de cette étape de polissage, on obtient la bande initiale 1 fournie dans la première étape du procédé selon l'invention.

En option, avant l'étape de laminage homogène à froid, on effectue sur la bande un recuit d'homogénéisation de la microstructure. Ce recuit d'homogénéisation de la microstructure est notamment réalisé au défilé dans un four de traitement thermique, appelé four de recuit d'homogénéisation de la microstructure dans la suite de la description, avec un temps de séjour dans le four de recuit d'homogénéisation de la microstructure compris entre 2 minutes et 25 minutes et une température de la bande lors du recuit d'homogénéisation de la microstructure comprise entre 850°C et 1200°C.

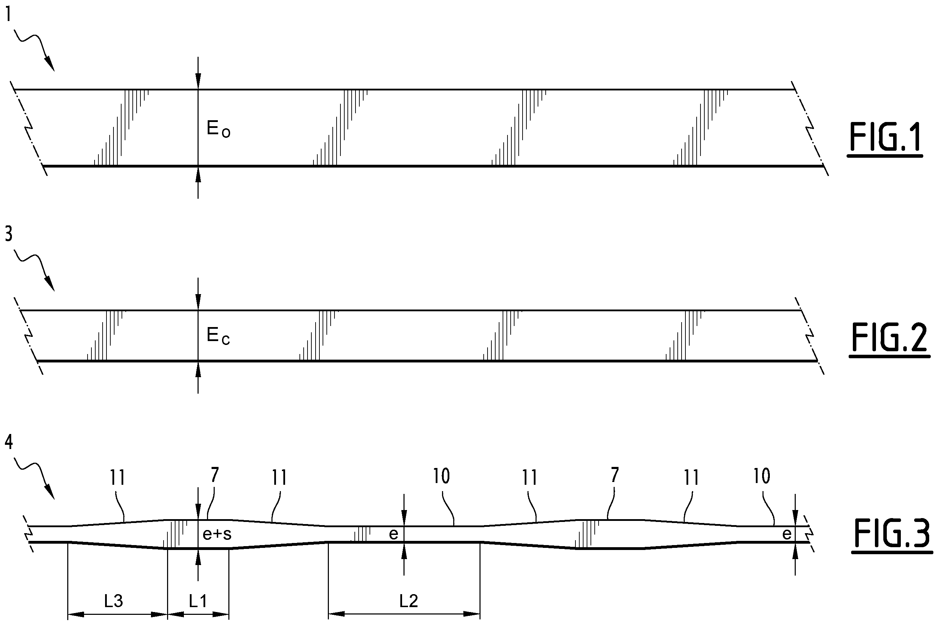

La bande initiale 1 a une épaisseur $E_0$ constante comprise entre 1,9 mm et 18 mm (voir figure 1).

On lamine ensuite la bande initiale 1 au cours d'une étape de laminage homogène à froid. Le laminage homogène est effectué suivant la longueur de la bande initiale 1.

Par laminage homogène, on entend un laminage transformant une bande d'épaisseur constante en une bande plus fine d'épaisseur également constante.

Plus particulièrement, l'étape de laminage homogène comprend une ou plusieurs passes assurées dans un laminoir où la bande passe dans une fente de laminage délimitée entre des rouleaux de travail. L'épaisseur de cette fente de laminage reste constante au cours de chaque passe de l'étape de laminage homogène.

Cette étape de laminage homogène aboutit à une bande intermédiaire 3 d'épaisseur $E_c$ constante selon la direction de laminage, c'est-à-dire selon la longueur de la bande intermédiaire 3 (voir figure 2).

En option, l'étape de laminage homogène comprend au moins un recuit intermédiaire de recristallisation.

Lorsqu'il est présent, le recuit intermédiaire de recristallisation est effectué entre deux passes de laminage homogène successives. En variante ou en option, il est réalisé avant l'étape de laminage flexible à la fin de l'étape de laminage homogène, c'est-à-dire après toutes les passes de laminage réalisées pendant l'étape de laminage homogène.

Par exemple, le recuit intermédiaire de recristallisation est réalisé au défilé dans un four de recuit intermédiaire avec une température de la bande lors du recuit intermédiaire comprise entre 850°C et 1200°C et un temps de séjour dans le four de recuit intermédiaire compris entre 30 secondes et 5 minutes.

Le recuit intermédiaire de recristallisation, ou s'il en est effectué plusieurs, le dernier recuit intermédiaire de recristallisation de l'étape de laminage homogène, est effectué lorsque la bande présente une épaisseur $E_i$ comprise entre l'épaisseur $E_0$ de la bande initiale 1 et l'épaisseur $E_c$ de la bande intermédiaire 3.

Lorsque le recuit intermédiaire de recristallisation est réalisé à la fin de l'étape de laminage homogène, l'épaisseur $E_i$ de la bande lors du recuit intermédiaire de recristallisation est égale à l'épaisseur $E_c$ de la bande intermédiaire 3 au début de l'étape de laminage flexible.

Avantageusement, dans le mode de réalisation dans lequel au moins un recuit intermédiaire de recristallisation est réalisé, on effectue un seul recuit intermédiaire de recristallisation. En particulier, ce recuit intermédiaire de recristallisation unique est effectué entre deux passes de laminage homogène successives lorsque la bande présente une épaisseur $E_i$ strictement supérieure à l'épaisseur $E_c$ de la bande intermédiaire 3.

De manière préférée, l'étape de laminage homogène ne comprend pas de recuit intermédiaire.

La bande intermédiaire 3 d'épaisseur $E_c$ obtenue à l'issue de l'étape de laminage homogène est ensuite soumise à une étape de laminage flexible à froid.

Le laminage flexible est réalisé selon une direction de laminage s'étendant suivant la longueur de la bande intermédiaire 3.

Le laminage flexible permet d'obtenir une bande d'épaisseur variable selon sa longueur.

Pour cela, on fait varier en continu l'épaisseur de la fente de laminage du laminoir utilisé. Cette variation est fonction de l'épaisseur souhaitée de la zone de la bande en cours de laminage de manière à obtenir une bande d'épaisseur variable selon sa longueur.

Plus particulièrement, et comme illustré sur la figure 3, on obtient à l'issue de l'étape de laminage flexible une bande 4 d'épaisseur variable comprenant des premières zones 7 ayant une première épaisseur e+s et des deuxièmes zones 10 ayant une deuxième épaisseur e, inférieure à la première épaisseur e+s. La première épaisseur e+s et la deuxième épaisseur e correspondent chacune à une épaisseur de fente de laminage donnée.

Les premières zones 7 et les deuxièmes zones 10 ont chacune une épaisseur sensiblement constante, respectivement e+s et e.

Elles sont reliées entre elles par des zones de liaison 11 d'épaisseur non constante selon la longueur de la bande 4 d'épaisseur variable. L'épaisseur des zones de liaison 11 varie entre e et e+s. Selon un exemple, elle varie linéairement entre e et e+s.

L'étape de laminage homogène et l'étape de laminage flexible engendrent dans les premières zones 7, c'est-à-dire dans les zones les plus épaisses de la bande 4, un taux $\tau_1$ de déformation plastique, après un éventuel recuit intermédiaire de recristallisation, supérieur ou égal à 30%, plus particulièrement compris entre 30% et 98%, encore plus particulièrement compris entre 30% et 80%. Dans les plages précitées, le taux $\tau_1$ de déformation plastique est avantageusement supérieur ou égal à 35%, plus particulièrement supérieur ou égal à 40%, et encore plus particulièrement supérieur ou égal à 50%.

Le taux $\tau_1$ de déformation plastique engendré dans les premières zones 7 est défini comme suit :

- Si aucun recuit intermédiaire de recristallisation n'est effectué pendant l'étape de laminage homogène, le taux $\tau_1$ de déformation plastique est le taux de réduction total engendré dans les premières zones 7 de la bande 4 par l'étape de laminage homogène et l'étape de laminage flexible, c'est-à-dire résultant de la réduction d'épaisseur depuis l'épaisseur initiale $E_0$ jusqu'à l'épaisseur e+s.

Dans ce cas, le taux $\tau_1$ de déformation plastique, en pourcentage, est donné par la formule suivante :

$$\tau_1 = \frac{E_0 - (e+s)}{E_0} \times 100 \quad (1).$$

Ainsi, dans le cas où aucun recuit intermédiaire de recristallisation n'est effectué, le taux $\tau_1$ de déformation plastique est égal au taux de réduction total engendré dans les premières zones 7 par l'étape de laminage homogène et l'étape de laminage flexible.

- Si au moins un recuit intermédiaire de recristallisation est effectué pendant l'étape de laminage homogène, le taux $\tau_1$ de déformation plastique est le taux de réduction engendré dans les premières zones 7 du fait de la réduction d'épaisseur de la bande de l'épaisseur $E_i$ qu'elle présente lors du dernier recuit intermédiaire de recristallisation effectué pendant l'étape de laminage homogène jusqu'à l'épaisseur e+s.

Dans ce cas, le taux $\tau_1$ de déformation plastique, en pourcentage, est donné par la formule suivante :

$$\tau_1 = \frac{E_i - (e+s)}{E_i} \times 100 \quad (2).$$

Ainsi, dans le cas où un ou plusieurs recuits intermédiaires sont effectués pendant l'étape de laminage homogène, le taux $\tau_1$ de déformation plastique est strictement inférieur au taux de réduction total engendré dans les premières zones 7 par l'étape de laminage homogène et l'étape de laminage flexible à froid.

Le taux $\tau_2$ de déformation plastique, après un éventuel recuit intermédiaire de recristallisation, engendré dans les deuxièmes zones 10, est strictement supérieur au taux $\tau_1$ de déformation plastique dans les premières zones 7. Il est calculé de manière analogue, en remplaçant e+s par e dans les formules (1) et (2) ci-dessus.

La différence $\Delta\tau$ de taux de déformation plastique entre les deuxièmes zones 10 et les premières zones 7 est donnée par la relation $\Delta\tau = \tau_2 - \tau_1$.

Cette différence $\Delta\tau$ est avantageusement inférieure ou égale à 13% si l'épaisseur $E_0$ est strictement supérieure à 2 mm. Elle est avantageusement inférieure ou égale à 1 0% si l'épaisseur $E_0$ est inférieure ou égale à 2 mm.

Plus particulièrement, la différence $\Delta\tau$ est inférieure ou égale à 10% si $E_0$ est strictement supérieure à 2mm, et la différence $\Delta\tau$ est inférieure ou égale à 8% si $E_0$ est inférieure ou égale à 2mm.

Avantageusement, l'épaisseur $E_c$ de la bande intermédiaire 3 avant l'étape de laminage flexible est en particulier égale à l'épaisseur e des deuxièmes zones 10 multipliée par un coefficient de réduction k compris entre 1,05 et 1,5. Avantageusement, k est environ égal à 1,3.

Avantageusement, les épaisseurs e+s et e des premières et deuxièmes zones 7, 10 respectent l'équation :

$$e + s = (n+1).e$$

où n est un coefficient constant compris entre 0,05 et 0,5.

En d'autres termes, la première épaisseur e+s est égale à la deuxième épaisseur e multipliée par un coefficient de multiplication compris entre 1,05 et 1,5.

Cette équation se réécrit de la manière suivante : *s* = *n.e*, c'est-à-dire que la surépaisseur s des premières zones 7 par rapport aux deuxièmes zones 10 est égale au coefficient n multiplié par l'épaisseur e des deuxièmes zones 10.

L'épaisseur e des deuxièmes zones 10 est comprise entre 0,05 mm et 10 mm, plus particulièrement entre 0,15 mm et 10 mm, encore plus particulièrement entre 0,25 mm et 8,5 mm. Lorsque l'on réalise des feuillards, l'épaisseur e est inférieure ou égale à 2 mm, avantageusement comprise entre 0,25 mm et 2 mm. Lorsque l'on réalise des tôles, l'épaisseur e est strictement supérieure à 2 mm, en particulier comprise entre 2,1 mm et 10mm, plus particulièrement comprise entre 2,1 mm et 8,5 mm.

On soumet ensuite la bande 4 d'épaisseur variable résultant de l'étape de laminage flexible à un recuit final de recristallisation.

Le recuit final de recristallisation est réalisé au défilé dans un four de recuit final. La température du four de recuit final est constante pendant le recuit final de recristallisation. La température de la bande 4 pendant le recuit final de recristallisation est comprise entre 850°C et 1200°C.

Le temps de séjour dans le four de recuit final est compris entre 20 secondes et 5 minutes, plus particulièrement entre 30 secondes et 3 minutes.

La vitesse de défilement de la bande 4 dans le four de recuit final est constante. Elle est par exemple comprise entre 2m/min et 20m/min pour un four de recuit final de longueur de chauffe égale à 10m.

Avantageusement, la température de la bande 4 pendant le recuit final est de 1025°C. Dans ce cas, le temps de séjour dans le four de recuit final est par exemple compris entre 30 secondes et 60 secondes pour une bande 4 d'épaisseur variable ayant des deuxièmes zones 10 d'épaisseur e inférieure ou égale à 2 mm. Le temps de séjour dans le four de recuit final est par exemple compris entre 3 minutes et 5 minutes pour une bande 4 d'épaisseur variable ayant des deuxièmes zones 10 d'épaisseur e strictement supérieure à 2 mm.

Le temps de séjour dans le four de recuit final, ainsi que la température de recuit final sont choisies de manière à obtenir après le recuit de recristallisation final une bande 4 ayant des propriétés mécaniques et des tailles de grains quasiment homogènes entre les premières zones 7 et les deuxièmes zones 10. La suite de la description précise le sens de « quasiment homogène ».

De préférence, le recuit final est réalisé sous atmosphère réductrice, c'est-à-dire par exemple sous hydrogène pur ou sous atmosphère $H_2$-$N_2$. La température de givre est de préférence inférieure à -40°C. Dans le cas d'une atmosphère $H_2$-$N_2$, la teneur en $N_2$ peut être comprise entre 0% et 95%. L'atmosphère $H_2$-$N_2$ comprend par exemple approximativement 70% de $H_2$ et 30% de $N_2$.

Selon un mode de réalisation, la bande 4 d'épaisseur variable passe en continu du laminoir de laminage flexible au four de recuit final, c'est-à-dire sans bobinage intermédiaire de la bande d'épaisseur variable 4.

En variante, à l'issue de l'étape de laminage flexible, on bobine la bande d'épaisseur variable 4 pour la transporter jusqu'au four de recuit final, puis on la déroule et on la soumet au recuit final de recristallisation.

Selon cette variante, la bande 4 enroulée a par exemple une longueur comprise entre 100 m et 2500 m, notamment si l'épaisseur e des deuxièmes zones 10 de la bande 4 est approximativement de 0,7 mm.

On obtient, à l'issue du recuit final de recristallisation, une bande 4 d'épaisseur variable selon sa longueur ayant les caractéristiques suivantes.

Elle comprend des premières zones 7 d'épaisseur e+s et des deuxièmes zones d'épaisseur e, éventuellement reliées entre elles par des zones de liaison 11 d'épaisseur variant entre e et e+s.

De préférence, la différence en valeur absolue entre la taille moyenne des grains des premières zones 7 et la taille moyenne des grains des deuxièmes zones 10 est inférieure ou égale à 0,5 indice selon la norme ASTM E112-10. La taille moyenne de grains en indice ASTM est déterminée en utilisant la méthode de comparaison à des images types décrite dans la norme ASTM E112-10. Conformément à cette méthode, pour déterminer la taille moyenne des grains d'un échantillon, on compare une image de la structure des grains sur écran obtenue au moyen d'un microscope optique à un grossissement donné de l'échantillon ayant subi une attaque colorante (« contrast etch » en anglais) avec des images types illustrant des grains maclés de différentes tailles ayant subi une attaque colorante (correspondant à la plaque III de la norme). L'indice de la taille moyenne des grains de l'échantillon est déterminé comme étant l'indice correspondant au grossissement utilisé porté sur l'image type ressemblant le plus à l'image vue sur l'écran du microscope.

Si l'image vue sur l'écran du microscope est intermédiaire entre deux images types successives de tailles de grains, l'indice de la taille moyenne des grains de l'image vue au microscope est déterminé comme étant la moyenne arithmétique entre les indices correspondant au grossissement utilisé portés sur chacune des deux images types.

Plus particulièrement, l'indice $G1_{ASTM}$ de la taille moyenne des grains des premières zones 7 est au plus inférieur de 0,5 à l'indice $G2_{ASTM}$ de la taille moyenne des grains des deuxièmes zones 10.

La bande 4 d'épaisseur variable peut présenter des propriétés mécaniques quasiment homogènes.

En particulier :

- la différence en valeur absolue entre la limite d'élasticité à 0,2% des premières zones 7 notée Rp1 et la limite d'élasticité à 0,2% des deuxièmes zones 10 notée Rp2 est inférieure ou égale à 6MPa, et
- la différence en valeur absolue entre la charge à la rupture des premières zones 7 notée Rm1 et la charge à la rupture des deuxièmes zones 10 notée Rm2 est inférieure ou égale à 6MPa.

Par limite d'élasticité à 0,2% on entend, de manière classique, la valeur de la contrainte à 0,2% de déformation plastique.

De manière classique, la charge à la rupture correspond à la contrainte maximale avant striction de l'échantillon test.

Dans l'exemple illustré, la bande 4 d'épaisseur variable présente un motif répété périodiquement sur toute la longueur de la bande 4. Ce motif comprend successivement une moitié de première zone 7 de longueur $\frac{L_1}{2}$, une zone de liaison 11 de longueur L3, une deuxième zone 10 de longueur L2, une zone de liaison 11 de longueur L3 et une moitié de première zone 7 de longueur $\frac{L_1}{2}$.

Avantageusement, la longueur L2 de la deuxième zone 10 est très nettement supérieure à la longueur L1 de la première zone 7. A titre d'exemple, la longueur L2 est comprise entre 20 et 100 fois la longueur L1.

Chaque séquence formée d'une première zone 7 encadrée par deux zones de liaison 11 forme une zone de surépaisseur de la bande 4 d'épaisseur variable, c'est-à-dire une zone d'épaisseur supérieure à e. Ainsi, la bande 4 d'épaisseur variable comprend des deuxièmes zones 10 de longueur L2 d'épaisseur e, séparées entre elles par des zones de surépaisseur.

Après le recuit final de recristallisation, on découpe la bande 4 d'épaisseur variable dans les zones de surépaisseur, de préférence au milieu des zones de surépaisseur.

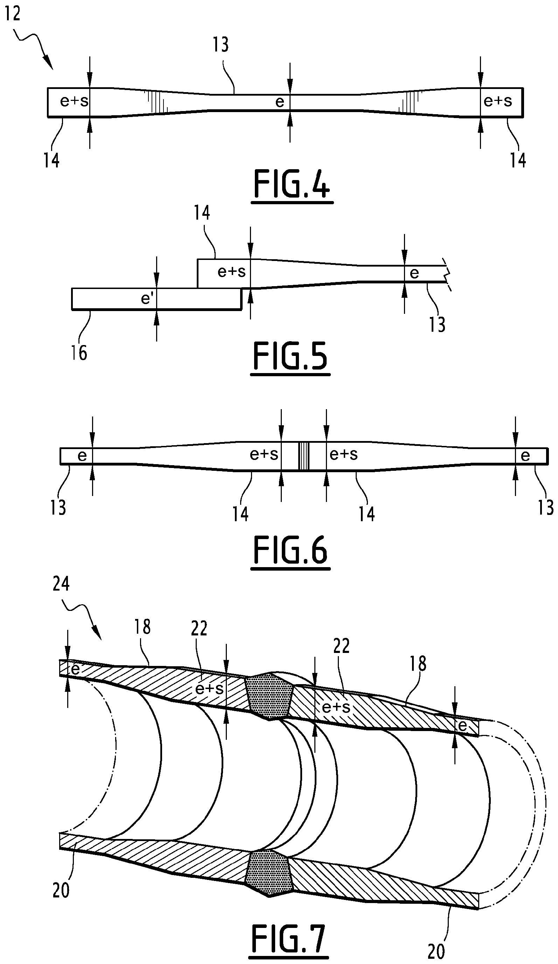

On obtient ainsi des flans 12 illustrés sur la figure 4 comprenant une deuxième zone de longueur L2 encadrée à chacune de ses extrémités longitudinales par une zone de liaison 11 de longueur L3 et par une moitié de première zone 7 de longueur $\frac{L1}{2}$.

A l'issue de l'étape de découpe, les flans 12 sont planés selon un procédé de planage connu.

Les flans 12 sont ensuite enroulés en bobines à l'unité.

Selon une variante du procédé de fabrication décrit ci-dessus, on réalise le planage de la bande 4 d'épaisseur variable après le recuit final de recristallisation et avant la découpe des flans 12.

Selon cette variante, on découpe la bande 4 d'épaisseur variable planée dans les zones de surépaisseur pour former les flans 12. De préférence, on découpe la bande 4 au milieu des zones de surépaisseur.

La découpe est par exemple réalisée sur la planeuse utilisée pour le planage de la bande 4. En variante, la bande planée 4 est enroulée en bobine, puis découpée sur une machine différente de la planeuse.

Les flans 12 sont ensuite enroulés en bobines à l'unité.

On obtient au moyen du procédé de fabrication décrit ci-dessus des flans 12 formés d'une pièce comprenant une zone centrale 13 d'épaisseur e, encadrée par des extrémités 14 renforcées, i.e. d'épaisseur supérieure à l'épaisseur e de la zone centrale 13. Les extrémités 14 correspondent à des zones de surépaisseur de la bande 4 d'épaisseur variable et la zone centrale 13 correspond à une deuxième zone 10 de la bande 4 d'épaisseur variable à partir de laquelle le flan 12 a été découpé.

Ces flans 12, qui présentent une épaisseur variable selon leur longueur tout en étant formés d'une pièce, ne présentent pas les faiblesses des assemblages soudés de l'état de la technique. En outre, leurs extrémités renforcées 14 permettent de les assembler par soudage à d'autres pièces en minimisant les faiblesses mécaniques dues à cet assemblage par soudage.

Selon des variantes, les flans 12 peuvent par exemple être obtenus par découpe de la bande 4 à d'autres endroits que dans deux zones de surépaisseurs successives. Par exemple, ils peuvent être obtenus par découpe alternativement dans une zone de surépaisseur et dans une deuxième zone 10. Dans ce cas, on obtient des flans 12 ayant une seule extrémité renforcée 14 d'épaisseur supérieure à e.

Ils peuvent également être obtenus par découpe dans deux deuxièmes zones 10 successives.

A titre d'exemple, et comme illustré sur la figure 5, on peut assembler un flan 12 selon l'invention avec une deuxième pièce 16 en soudant l'une des extrémités renforcées 14 du flan 12 à un bord de la deuxième pièce 16. L'épaisseur de la deuxième pièce 16 est de préférence supérieure à l'épaisseur de la zone centrale 13 du flan 12. La soudure réalisée est plus particulièrement une soudure à clin, encore appelée soudure à recouvrement.

La pièce 16 peut être un flan 12 tel que décrit ci-dessus.

Ainsi, sur la figure 6, on a illustré deux flans 12 assemblés bout à bout par soudage. Ces deux flans 12 sont soudés entre eux par leurs extrémités renforcées 14.

Dans les exemples illustrés sur les figures 5 et 6 :

- la longueur de la zone centrale 13 est par exemple comprise entre 40 m et 60 m ; et
- la longueur de chaque extrémité renforcée 14 est par exemple comprise entre 0,5 m et 2 m.

La deuxième épaisseur e est notamment environ égale à 0,7 mm.

La première épaisseur e+s est environ égale à 0,9 mm.

En variante, on forme une pièce non plane à partir du flan 12.

Ainsi, dans l'exemple représenté sur la figure 7, on a formé à partir du flan 12 un tronçon de tube 18.

On appelle bords longitudinaux les bords du flan 12 s'étendant selon la longueur du flan 12.

Pour fabriquer le tronçon de tube 18, on enroule le flan 12 selon sa largeur, c'est-à-dire autour d'un axe longitudinal L de manière à former un flan 12 enroulé. On soude ensuite entre eux les bords longitudinaux du flan 12 enroulé de manière à former le tronçon de tube 18. Ce tronçon de tube 18 présente une zone centrale 20 cylindrique d'épaisseur e et des extrémités renforcées 22 cylindriques d'épaisseur supérieure à l'épaisseur e, et en particulier égale à e+s.

On réalise ensuite un tube 24 en soudant au moins deux tronçons de tube 18 entre eux par leurs extrémités renforcées 22. La soudure est une soudure orbitale, en particulier une soudure de type bout à bout.

L'épaisseur e+s des extrémités renforcées 22 est définie en fonction des efforts de traction que doit subir le tube 24 pendant son montage et durant son utilisation.

Un tel tube 24 constitue par exemple un tube cryogénique adapté pour le transport de gaz naturel liquéfié et destiné à former par exemple le tube principal revêtu d'un matériau le protégeant contre la corrosion d'une conduite sous-marine cryogénique de transport de gaz naturel liquéfié ou le tube intérieur d'une telle conduite.

Dans ce cas, on a par exemple :

- l'épaisseur e environ égale à 8,2 mm ;
- l'épaisseur e+s environ égale à 9,43 mm.

La longueur L2 de la zone centrale 20 d'un tronçon de tube 18 est environ égale à 8m.

Le procédé de fabrication selon l'invention est particulièrement avantageux. En effet, il permet d'obtenir une bande en alliage principalement à base de fer et de nickel ayant la composition chimique définie ci-dessus ayant des zones d'épaisseurs différentes mais des propriétés mécaniques quasi-homogènes. Ces propriétés sont obtenues grâce à l'utilisation d'un taux de déformation plastique après un éventuel recuit intermédiaire de recristallisation engendré par les étapes de laminage homogène et de laminage flexible dans les zones les plus épaisses supérieur ou égal à 30%.

Les exemples expérimentaux suivants illustrent l'importance de la plage de taux de déformation plastique revendiquée pour ce type d'alliage.

Dans une première série d'expériences, on a fabriqué des feuillards d'épaisseur variable, c'est-à-dire des bandes 4 d'épaisseur variable dont l'épaisseur e des deuxièmes zones 10 est inférieure ou égale à 2 mm.

Le tableau 1 ci-après illustre des essais de fabrication de feuillards d'épaisseur variable sans recuit de recristallisation intermédiaire.

Le tableau 2 ci-après contient des caractéristiques des feuillards obtenus par les essais du tableau 1.

Le tableau 3 ci-après illustre des essais de fabrication de feuillards d'épaisseur variable avec un recuit intermédiaire de recristallisation à l'épaisseur $E_i$.

Le tableau 4 ci-après contient des caractéristiques des feuillards obtenus par les essais du tableau 3.

Dans une deuxième série d'expériences, on a fabriqué des tôles d'épaisseur variable, c'est-à-dire des bandes 4 d'épaisseur variable dont l'épaisseur e des deuxièmes zones 10 est strictement supérieure à 2 mm.

Le tableau 5 illustre des essais de fabrication de tôles d'épaisseur variable avec ou sans recuit intermédiaire.

Le tableau 6 ci-après contient des caractéristiques des tôles obtenues par les essais du tableau 5.

Dans tous les tableaux, on a souligné les essais conformes à l'invention.

On constate que lorsque le taux de déformation plastique $\tau_1$ après un éventuel recuit intermédiaire de recristallisation est supérieur ou égal à 30% (essais 1 à 7 du tableau 1, 1 à 3 du tableau 3 et 1 à 9 du tableau 5), la bande 4 d'épaisseur variable obtenue présente une différence de taille moyenne de grains entre la taille moyenne des grains des premières zones 7 (épaisseur e+s) et la taille des grains des deuxièmes zones 10 (épaisseur e) inférieure ou égale à 0,5 indice ASTM en valeur absolue. Cette faible différence de taille moyenne de grains entre les premières zones 7 et les deuxièmes zones 10 résulte en des propriétés mécaniques quasi-homogènes, à savoir une différence de limite d'élasticité à 0,2% DeltaRp entre les premières zones 7 et les deuxièmes zones 10 inférieure ou égale à 6 MPa en valeur absolue, et une différence entre la charge à la rupture DeltaRm des premières zones 7 et des deuxièmes zones

inférieure ou égale à 6 MPa en valeur absolue.

Il est ainsi possible d'obtenir une bande 4 d'épaisseur variable ayant des propriétés mécaniques et des tailles de grains quasiment homogènes à l'issue d'un recuit de recristallisation très simple, puisque réalisé à température et vitesse de défilement constants.

Tableau 1

| Essai | Longueur d'onde (m) | $E_0$ (mm) | k | $E_c$ (mm) | e (mm) | n=s/e | e+s (mm) | L1 (m) | L2 (m) | L3 (m) | $\tau 1$ (%) | $\tau 2$ (%) | $\tau 2$-$\tau 1$ (%) | Recuit final T°C ; durée |
|---|---|---|---|---|---|---|---|---|---|---|---|---|---|---|
| 1 | 50 | 4,2 | 1,3 | 2,0 | 1,5 | 0,25 | 1,88 | 1,50 | 1,90 | 44,7 | 55 | 64 | 9 | 1025°C ; 60s |
| 2 | 50 | 4,2 | 1,15 | 1,7 | 1,5 | 0,15 | 1,73 | 1,50 | 1,90 | 44,7 | 59 | 64 | 5 | 1025°C ; 60s |
| 3 | 50 | 3,2 | 1,15 | 1,2 | 1,0 | 0,15 | 1,15 | 1,00 | 1,50 | 46,0 | 64 | 69 | 5 | 1025°C ; 60s |
| 4 | 50 | 2,6 | 1,3 | 0,9 | 0,7 | 0,25 | 0,88 | 1,00 | 1,50 | 46,0 | 66 | 73 | 7 | 1025°C ; 40s |
| 5 | 50 | 2,6 | 1,15 | 0,8 | 0,7 | 0,15 | 0,81 | 1,00 | 1,50 | 46,0 | 69 | 73 | 4 | 1025°C ; 40s |
| 6 | 60 | 2,6 | 1,3 | 0,9 | 0,7 | 0,15 | 0,81 | 1,00 | 1,50 | 56,0 | 69 | 73 | 4 | 1025°C ; 40s |
| 7 | 50 | 2,1 | 1,3 | 0,7 | 0,5 | 0,15 | 0,58 | 1,20 | 1,50 | 45,8 | 73 | 76 | 4 | 1025°C ; 30s |
| 8 | 50 | 2,3 | 1,3 | 2,3 | 1,8 | 0,25 | 2,25 | 1,20 | 1,50 | 45,8 | 2 | 22 | 20 | 1025°C ; 60s |

Tableau 2

| Essai | Propriétés à l'épaisseur e+s | | | Propriétés à l'épaisseur e | | | Delta Rp (MPa) | Delta Rm (MPa) | DeltaG$_{ASTM}$ |
|---|---|---|---|---|---|---|---|---|---|
| | G1$_{ASTM}$ | Rp (MPa) | Rm (MPa) | G2$_{ASTM}$ | Rp (MPa) | Rm (MPa) | | | |
| 1 | 8 | 288 | 487 | 8,5 | 292 | 491 | -4 | -4 | 0,5 |
| 2 | 8,5 | 293 | 492 | 9 | 296 | 495 | -3 | -3 | 0,5 |
| 3 | 8,5 | 293 | 492 | 9 | 295 | 495 | -2 | -3 | 0,5 |
| 4 | 8,5 | 293 | 490 | 9 | 296 | 496 | -3 | -6 | 0,5 |
| 5 | 9 | 297 | 496 | 9 | 296 | 496 | 1 | 0 | 0 |
| 6 | 9 | 297 | 495 | 9 | 296 | 496 | 1 | -1 | 0 |
| 7 | 9,5 | 300 | 501 | 9,5 | 300 | 501 | 0 | 0 | 0 |
| 8 | 7,5 | 284 | 482 | 8,5 | 292 | 490 | -8 | -8 | 1 |

EP 3 094 756 B1

Tableau 3

| Essai | Longueur d'onde (m) | $E_0$ (mm) | k | $E_i$ (mm) | Recuit à $E_i$ T°C ; durée | $E_c$ (mm) | e (mm) | n=s/e | e+s (mm) | L1 (m) | L2 (m) | L3 (m) | $\tau 1$ (%) | $\tau 2$ (%) | $\tau 2-\tau 1$ (%) | Recuit final T°C ; durée |
|---|---|---|---|---|---|---|---|---|---|---|---|---|---|---|---|---|
| 1 | 50 | 2.6 | 13 | 1,5 | 1025°C ; 50s | 0,8 | 0,6 | 0,25 | 0,75 | 1,20 | 1,50 | 45,8 | 50 | 60 | 10 | 1025°C ; 40s |
| 2 | 50 | 2,6 | 1,3 | 1,5 | 1025°C ; 50s | 0,8 | 0,6 | 0,15 | 0,69 | 1,20 | 1,50 | 45,8 | 54 | 60 | 6 | 1025°C ; 40s |
| 3 | 60 | 2,6 | 1,3 | 1,5 | 1025°C ; 50s | 0,7 | 0,5 | 0,15 | 0,58 | 1,20 | 1,50 | 55,8 | 62 | 67 | 5 | 1025°C ; 30s |
| 4 | 50 | 4,2 | 1,30 | 2,00 | 1025°C ; 80s | 1,95 | 1,5 | 0,25 | 1,88 | 1,50 | 1,90 | 44,7 | 6 | 25 | 19 | 1025°C ; 60s |
| 5 | 50 | 4,2 | 1,15 | 2,00 | 1025°C ; 80s | 1,73 | 1,5 | 0,15 | 1,73 | 1,50 | 1,90 | 44,7 | 14 | 25 | 11 | 1025°C ; 60s |
| 6 | 50 | 3,2 | 1,30 | 1,30 | 1025°C ; 50s | 1,30 | 1,0 | 0,25 | 1,25 | 1,50 | 1,90 | 44,7 | 4 | 23 | 19 | 1025°C ; 60s |
| 7 | 50 | 3,2 | 1,15 | 1,50 | 1025°C ; 60s | 1,15 | 1,0 | 0,15 | 1,15 | 1,00 | 1,50 | 46,0 | 23 | 33 | 10 | 1025°C ; 60s |
| 8 | 60 | 2,6 | 1,15 | 1,00 | 1000°C ; 40s | 0,81 | 0,7 | 0,15 | 0,81 | 1,00 | 1,50 | 56,0 | 20 | 30 | 11 | 1025°C ; 40s |

Tableau 4

| Essai | Propriétés à l'épaisseur e+s | | | Propriétés à l'épaisseur e | | | Delta Rp (MPa) | Delta Rm (MPa) | DeltaG$_{ASTM}$ |
|---|---|---|---|---|---|---|---|---|---|
| | G1$_{ASTM}$ | Rp (MPa) | Rm (MPa) | G2$_{ASTM}$ | Rp (MPa) | Rm (MPa) | | | |
| 1 | 8,5 | 292 | 491 | 8,5 | 293 | 491 | -1 | 0 | 0 |
| 2 | 8,5 | 293 | 492 | 8,5 | 291 | 492 | 2 | 0 | 0 |
| 3 | 8,5 | 293 | 490 | 9 | 296 | 496 | -3 | -6 | 0,5 |
| 4 | 7 | 281 | 478 | 8 | 290 | 487 | -9 | -9 | 1 |
| 5 | 7 | 281 | 477 | 8 | 288 | 487 | -7 | -10 | 1 |
| 6 | 6,5 | 277 | 473 | 8 | 288 | 487 | -11 | -14 | 1,5 |
| 7 | 7 | 282 | 477 | 8 | 289 | 487 | -7 | -10 | 1 |
| 8 | 7 | 282 | 479 | 8 | 289 | 487 | -7 | -8 | 1 |

Tableau 5

| Essai | Longueur d'onde (m) | $E_0$ (mm) | k | $E_i$ (mm) | Recuit à $E_i$ T°C ; durée | $E_c$ (mm) | e (mm) | n=s/e | e+s (mm) | L1 (m) | L2 (m) | L3 (m) | $\tau 1$ (%) | $\tau 2$ (%) | $\tau 2$-$\tau 1$ (%) | Recuit final T°C ; durée |
|---|---|---|---|---|---|---|---|---|---|---|---|---|---|---|---|---|
| 1 | 12 | 16 | 1,30 | | Néant | 10,7 | 8,2 | 0,25 | 10,25 | 1,00 | 1,50 | 8,0 | 36 | 49 | 13 | 1025°C ; 5min |
| 2 | 6 | 16 | 1,15 | | Néant | 9,4 | 8,2 | 0,15 | 9,43 | 0,50 | 0,75 | 4,0 | 41 | 49 | 8 | 1025°C ; 5min |
| 3 | 12 | 8,2 | 1,30 | | Néant | 5.5 | 4,2 | 0,25 | 5,25 | 0,50 | 0,75 | 10,0 | 36 | 49 | 13 | 1025°C ; 3min |
| 4 | 12 | 8,2 | 1,15 | | Néant | 4,8 | 4,2 | 0,15 | 4,83 | 1,50 | 2,25 | 6,0 | 41 | 49 | 8 | 1025°C ; 3min |
| 5 | 6 | 8,2 | 1,30 | | Néant | 4,2 | 3,2 | 0,25 | 4,00 | 0,80 | 1,20 | 2,8 | 51 | 61 | 10 | 1025°C ; 3min |
| 6 | 9 | 8,2 | 1,15 | | Néant | 3,7 | 3,2 | 0,15 | 3,68 | 1,00 | 1,50 | 5,0 | 55 | 61 | 6 | 1025°C ; 3min |
| 7 | 12 | 16 | 1,30 | 8,2 | 1050°C ; 5 min | 4,2 | 3,2 | 0,25 | 4,00 | 1,00 | 1,50 | 8,0 | 51 | 61 | 10 | 1025°C ; 3min |
| 8 | 12 | 16 | 1,15 | 8,2 | 1050°C :5 min | 4,8 | 4,2 | 0,15 | 4,83 | 0,50 | 0,75 | 10,0 | 41 | 49 | 8 | 1025°C ; 3min |
| 9 | 6 | 16 | 1,15 | 8,2 | 1050°C :5 min | 3,7 | 3,2 | 0,15 | 3,68 | 0,50 | 0,75 | 4,0 | 55 | 61 | 6 | 1025°C ; 3min |

Tableau 6

| Essai | Propriétés à l'épaisseur e+s | | | Propriétés à l'épaisseur e | | | Delta Rp (MPa) | Delta Rm (MPa) | DeltaG$_{ASTM}$ |
|---|---|---|---|---|---|---|---|---|---|
| | G1$_{ASTM}$ | Rp (MPa) | Rm (MPa) | G2$_{ASTM}$ | Rp (MPa) | Rm (MPa) | | | |
| 1 | 7 | 280 | 479 | 7,5 | 285 | 483 | -5 | -4 | 0,5 |
| 2 | 7 | 281 | 477 | 7,5 | 285 | 483 | -4 | -6 | 0,5 |
| 3 | 7,5 | 285 | 482 | 8 | 288 | 487 | -3 | -5 | 0,5 |
| 4 | 8 | 288 | 487 | 8 | 288 | 487 | 0 | 0 | 0 |
| 5 | 8,5 | 293 | 492 | 8,5 | 292 | 492 | 1 | 0 | 0 |
| 6 | 8,5 | 292 | 491 | 9 | 297 | 496 | -5 | -5 | 0,5 |
| 7 | 8,5 | 291 | 490 | 8,5 | 293 | 490 | -2 | 0 | 0 |
| 8 | 8 | 289 | 487 | 8,5 | 292 | 491 | -3 | -4 | 0,5 |
| 9 | 8,5 | 292 | 491 | 8,5 | 292 | 490 | 0 | 1 | 0 |

**Revendications**

1. Procédé de fabrication d'une bande d'épaisseur variable selon sa longueur, ladite bande étant réalisée dans un alliage comprenant, en poids :

34,5% $\leq$ Ni $\leq$ 53,5%
0,15% $\leq$ Mn $\leq$ 1,5%
0 $\leq$ Si $\leq$ 0,35%, de préférence 0,1% $\leq$ Si $\leq$ 0,35%
0 $\leq$ C $\leq$ 0,07%

optionnellement :

0 $\leq$ Co $\leq$ 20%
0 $\leq$ Ti $\leq$ 0,5%
0,01% $\leq$ Crs $\leq$ 0,5%

le reste étant du fer et des impuretés résultant nécessairement de l'élaboration,
le procédé comprenant successivement les étapes suivantes :

- fourniture d'une bande initiale (1) d'épaisseur constante ($E_0$) obtenue par laminage à chaud ;
- laminage homogène à froid de la bande initiale (1) selon sa longueur pour obtenir une bande intermédiaire (3) d'épaisseur constante ($E_c$) selon la direction de laminage ;
- laminage flexible à froid de la bande intermédiaire (3) selon sa longueur pour obtenir une bande (4) d'épaisseur variable selon la direction de laminage, la bande (4) d'épaisseur variable ayant, selon sa longueur, des premières zones (7) ayant une première épaisseur (e+s) et des deuxièmes zones (10) ayant une deuxième épaisseur (e), inférieure à la première épaisseur (e+s),
- recuit final de recristallisation au défilé de la bande (4) d'épaisseur variable dans un four de recuit final,

dans lequel le taux de déformation plastique engendré, après un éventuel recuit intermédiaire de recristallisation, par les étapes de laminage homogène à froid et de laminage flexible à froid dans les premières zones (7) de la bande (4) d'épaisseur variable est supérieur ou égal à 30% ; et
dans lequel la différence ($\Delta\tau$) entre le taux de déformation plastique ($\tau2$) engendré, après un éventuel recuit intermédiaire de recristallisation, par les étapes de laminage homogène à froid et de laminage flexible à froid dans les deuxièmes zones (10) de la bande à épaisseur variable (4) et le taux de déformation plastique ($\tau1$) engendré, après un éventuel recuit intermédiaire de recristallisation, par les étapes de laminage homogène à froid et de laminage flexible à froid dans les premières zones (7) de la bande à épaisseur variable (4) est inférieure ou égale à 13% si l'épaisseur ($E_0$) de la bande initiale (1) est strictement supérieure à 2 mm et inférieure ou égale à 10% si l'épaisseur

($E_0$) de la bande initiale (1) est inférieure ou égale à 2 mm.

2. Procédé de fabrication selon la revendication 1, dans lequel le recuit final de recristallisation est réalisé à une température de recuit final comprise entre 850°C et 1200°C et un temps de séjour dans le four de recuit final compris entre 20 secondes et 5 minutes, et de préférence entre 30 secondes et 3 minutes.

3. Procédé de fabrication selon l'une des revendications 1 et 2, dans lequel l'étape de laminage homogène comprend au moins un recuit intermédiaire de recristallisation réalisé entre deux passes de laminage homogène successives et/ou à la fin du laminage homogène avant le laminage flexible à froid de la bande intermédiaire (3).

4. Procédé de fabrication selon la revendication 3, dans lequel le recuit intermédiaire de recristallisation est réalisé au défilé dans un four de recuit intermédiaire avec une température de la bande lors du recuit intermédiaire comprise entre 850°C et 1200°C et un temps de séjour dans le four de recuit intermédiaire compris entre 30 secondes et 5 minutes.

5. Procédé selon l'une quelconque des revendications précédentes, dans lequel l'épaisseur ($E_c$) de la bande intermédiaire (3) est égale à la deuxième épaisseur (e) multipliée par un coefficient de réduction compris entre 1,05 et 1,5.

6. Procédé selon l'une quelconque des revendications précédentes, dans lequel la première épaisseur (e+s) est égale à la deuxième épaisseur (e) multipliée par un coefficient de multiplication compris entre 1,05 et 1,5.

7. Procédé de fabrication selon l'une quelconque des revendications précédentes, dans lequel avant l'étape de laminage homogène à froid, on soumet la bande initiale (1) à un recuit d'homogénéisation de la microstructure, en particulier au défilé dans un four de recuit d'homogénéisation de la microstructure avec un temps de séjour dans le four de recuit d'homogénéisation de la microstructure compris entre 2 minutes et 25 minutes et une température du four de recuit d'homogénéisation de la microstructure comprise entre 850°C et 1200°C.

8. Procédé de fabrication selon l'une quelconque des revendications précédentes, dans lequel la bande initiale (1) est obtenue à partir d'un demi-produit tel qu'une brame ou un lingot constitué d'un alliage élaboré au four à arc électrique ou en four sous vide à induction.

9. Procédé de fabrication selon l'une quelconque des revendications précédentes, dans lequel l'épaisseur ($E_0$) de la bande initiale (1) est comprise entre 1,9 mm et 18 mm.

10. Procédé selon l'une quelconque des revendications 1 à 9, lequel comprend, après l'étape de recuit final de recristallisation, une étape de planage de la bande d'épaisseur variable (14).

11. Procédé selon l'une quelconque des revendications 1 à 10, dans lequel l'alliage comprend, en poids :

$34,5\% \leq Ni \leq 42,5\%$
$0,15\% \leq Mn \leq 0,5\%$
$0 \leq Si \leq 0,35\%$, de préférence $0,1\% \leq Si \leq 0,35\%$
$0,010\% \leq C \leq 0,050\%$

optionnellement :

$0 \leq Co \leq 20\%$
$0 \leq Ti \leq 0,5\%$
$0,01\% \leq Crs \leq 0,5\%$

le reste étant du fer et des impuretés résultant nécessairement de l'élaboration.

12. Procédé de fabrication d'au moins un flan (12), comprenant :

- la mise en oeuvre du procédé de fabrication selon l'une quelconque des revendications 1 à 11 de manière à obtenir une bande (4) d'épaisseur variable selon sa longueur ; et
- la découpe de la bande (4) d'épaisseur variable de manière à obtenir plusieurs flans (12).

**13.** Procédé selon la revendication 12, dans lequel la découpe de la bande (4) d'épaisseurs variables est réalisée dans les premières zones (7), chaque flan (12) étant formé par une partie de la bande d'épaisseur variable (4) localisée entre deux premières zones (7) successives.

**14.** Procédé de fabrication d'un tronçon de tube cryogénique (18), comprenant :

- la fabrication d'au moins un flan (12) par mise en oeuvre du procédé de fabrication selon la revendication 13, le flan (12) comprenant des bords longitudinaux s'étendant selon la longueur du flan (12) ; puis
- l'enroulement du flan (12) selon sa largeur ; et
- le soudage entre eux des bords longitudinaux du flan (12) enroulé pour former un tronçon de tube (18).

**15.** Bande (4) d'épaisseur variable susceptible d'être obtenue par le procédé de fabrication selon l'une des revendications 1 à 11, la bande (4) d'épaisseur variable ayant, selon sa longueur, des premières zones (7) ayant une première épaisseur (e+s) et des deuxièmes zones (10) ayant une deuxième épaisseur (e) inférieure à la première épaisseur (e+s), la bande d'épaisseur variable (4) étant réalisée dans un alliage comprenant en poids:

34,5% $\leq$ Ni $\leq$ 53,5%
0,15% $\leq$ Mn $\leq$ 1,5%
0 $\leq$ Si $\leq$ 0,35%, de préférence 0,1% $\leq$ Si $\leq$ 0,35%
0 $\leq$ C $\leq$ 0,07%

optionnellement :

0 $\leq$ Co $\leq$ 20%
0 $\leq$ Ti $\leq$ 0,5%
0,01% $\leq$ Crs $\leq$ 0,5%

le reste étant du fer et des impuretés résultant nécessairement de l'élaboration.

**16.** Bande (4) selon la revendication 15, les premières zones (7) ayant une première taille moyenne de grains (G1$_{ASTM}$) et les deuxièmes zones (10) ayant une deuxième taille moyenne de grain (G2$_{ASTM}$), la différence en valeur absolue entre la première taille de grains (G1$_{ASTM}$) et la deuxième taille de grains (G2$_{ASTM}$) étant inférieure ou égale à 0,5 indice selon la norme ASTM E112-10.

**17.** Bande selon l'une des revendications 15 et 16, l'alliage comprenant en poids :

34,5 $\leq$ Ni $\leq$ 42,5%
0,15% $\leq$ Mn $\leq$ 0,5%
0,1% $\leq$ Si $\leq$ 0,35%
0,010% $\leq$ C $\leq$ 0,050%

optionnellement :

0 $\leq$ Co $\leq$ 20%
0 $\leq$ Ti $\leq$ 0,5%
0,01% $\leq$ Crs $\leq$ 0,5%

le reste étant du fer et des impuretés résultant nécessairement de l'élaboration.

**18.** Flan (12) susceptible d'être obtenu par le procédé de la revendication 12 ou 13, le flan (12) ayant, selon sa longueur, au moins une première zone renforcée (14) ayant une première épaisseur (e+s) et au moins une deuxième zone (13) ayant une deuxième épaisseur (e) inférieure à la première épaisseur (e+s), le flan (12) étant réalisé dans un alliage comprenant en poids:

34,5% $\leq$ Ni $\leq$ 53,5%
0,15% $\leq$ Mn $\leq$ 1,5%
0 $\leq$ Si $\leq$ 0,35%, de préférence 0,1% $\leq$ Si $\leq$ 0,35%
0 $\leq$ C $\leq$ 0,07%

optionnellement :

$0 \leq Co \leq 20\%$
$0 \leq Ti \leq 0,5\%$
$0,01\% \leq Cr \leq 0,5\%$

le reste étant du fer et des impuretés résultant nécessairement de l'élaboration.

19. Flan (12) selon la revendication 18, la première zone renforcée (14) ayant une première taille moyenne de grains ($G1_{ASTM}$) et la deuxième zone (13) ayant une deuxième taille moyenne de grain ($G2_{ASTM}$), la différence en valeur absolue entre la première taille de grains ($G1_{ASTM}$) et la deuxième taille de grains ($G2_{ASTM}$) étant inférieure ou égale à 0,5 indice selon la norme ASTM E112-10.

20. Flan selon l'une des revendications 18 et 19, l'alliage comprenant en poids :

$34,5 \leq Ni \leq 42,5\%$
$0,15\% \leq Mn \leq 0,5\%$
$0,1\% \leq Si \leq 0,35\%$
$0,010\% \leq C \leq 0,050\%$

optionnellement :

$0 \leq Co \leq 20\%$
$0 \leq Ti \leq 0,5\%$
$0,01\% \leq Crs \leq 0,5\%$

le reste étant du fer et des impuretés résultant nécessairement de l'élaboration.

21. Tronçon de tube (18) susceptible d'être obtenu par le procédé selon la revendication 14, lequel est réalisé dans un alliage comprenant en poids :

$34,5\% \leq Ni \leq 53,5\%$
$0,15\% \leq Mn \leq 1,5\%$
$0 \leq Si \leq 0,35\%$, de préférence $0,1\% \leq Si \leq 0,35\%$
$0 \leq C \leq 0,07\%$

optionnellement :

$0 \leq Co \leq 20\%$
$0 \leq Ti \leq 0,5\%$
$0,01\% \leq Crs \leq 0,5\%$

le reste étant du fer et des impuretés résultant nécessairement de l'élaboration, et lequel tronçon comprend une zone centrale (20) cylindrique d'épaisseur (e) encadrée par des extrémités renforcées (22) cylindriques formées d'une pièce avec la zone centrale (20), d'épaisseur supérieure à l'épaisseur (e) de la zone centrale (20).

22. Tronçon de tube (18) selon la revendication 21, dans lequel l'alliage comprend, en poids :

$34,5 \leq Ni \leq 42,5\%$
$0,15\% \leq Mn \leq 0,5\%$
$0,1\% \leq Si \leq 0,35\%$
$0,010\% \leq C \leq 0,050\%$

optionnellement :

$0 \leq Co \leq 20\%$
$0 \leq Ti \leq 0,5\%$
$0,01\% \leq Crs \leq 0,5\%$

le reste étant du fer et des impuretés résultant nécessairement de l'élaboration.

23. Ensemble comprenant au moins un flan (12) selon l'une des revendications 18 à 20 et une pièce (16) soudée au flan (12).

24. Ensemble selon la revendication 23, dans lequel la pièce (16) est soudée à la première zone renforcée (14) du flan (12).

25. Ensemble selon la revendication 24, dans lequel la pièce (16) est un flan (12) selon l'une des revendications 18 à 20.

**Patentansprüche**

1. Verfahren zum Herstellen eines Bands mit entlang seiner Länge variabler Dicke, wobei das Band aus einer Legierung gefertigt wird, die in Gewicht aufweist:

$34,5\% \leq Ni \leq 53,5\%$
$0,15\% \leq Mn \leq 1,5\%$
$0 \leq Si \leq 0,35\%$, vorzugsweise $0,1\% \leq Si \leq 0,35\%$
$0 \leq C \leq 0,07\%$

wahlweise:

$0 \leq Co \leq 20\%$
$0 \leq Ti \leq 0,5\%$
$0,01\% \leq Cr \leq 0,5\%$

wobei es sich bei dem Rest um Eisen und sich zwangsläufig aus der Verarbeitung ergebende Verunreinigungen handelt,
wobei das Verfahren nacheinander die folgenden Schritte umfasst:

- Bereitstellen eines Ausgangsbands (1) mit einer konstanten Dicke ($E_0$), das durch Warmwalzen erhalten wurde;
- gleichmäßiges Kaltwalzen des Ausgangsbands (1) entlang seiner Länge, um ein Zwischenband (3) mit konstanter Dicke ($E_c$) entlang der Walzrichtung zu erhalten;
- flexibles Kaltwalzen des Zwischenbands (3) entlang seiner Länge, um ein Band (4) mit entlang der Walzrichtung variabler Dicke zu erhalten, wobei das Band (4) mit variabler Dicke seiner Länge nach erste Bereiche (7), die eine erste Dicke (e+s) haben, und zweite Bereiche (10) hat, die eine zweite Dicke (e) haben, die kleiner ist als die erste Dicke (e+s),
- abschließendes Rekristallisationsglühen beim Durchlauf des Bands (4) mit variabler Dicke in einem Ofen zum abschließenden Glühen,

wobei die Rate entstandener plastischer Umformung nach einem eventuellen Zwischenrekristallisationsglühen durch die Schritte des gleichmäßigen Kaltwalzens und des flexiblen Kaltwalzens in den ersten Bereichen (7) des Bands (4) mit variabler Dicke höher als oder gleich 30% ist, und
wobei die Differenz ($\Delta_\tau$) die Rate der entstandenen plastischen Umformung ($\tau 2$) nach einem eventuellen Zwischenrekristallisationsglühen durch die Schritte des gleichmäßigen Kaltwalzens und des flexiblen Kaltwalzens in den zweiten Bereichen (10) des Bands (4) mit variabler Dicke und die Rate der entstandene plastischen Umformung ($\tau 1$) nach einem eventuellen Zwischenrekristallisationsglühen durch die Schritte des gleichmäßigen Kaltwalzens und des flexiblen Kaltwalzens in den ersten Bereichen (7) des Bands (4) mit variabler Dicke niedriger als oder gleich 13% ist, wenn die Dicke ($E_0$) des Ausgangsbands (1) strikt größer als 2 mm ist, und niedriger als oder gleich 10% ist, wenn die Dicke ($E_0$) des Ausgangsbands (1) kleiner als oder gleich 2 mm ist.

2. Herstellungsverfahren nach Anspruch 1, bei dem das abschließende Rekristallisationsglühen bei einer abschließenden Glühtemperatur von zwischen 850°C und 1200°C und einer Verweildauer im abschließenden Glühofen von zwischen 20 Sekunden und 5 Minuten, und vorzugsweise von zwischen 30 Sekunden und 3 Minuten erfolgt.

3. Herstellungsverfahren nach einem der Ansprüche 1 und 2, bei dem der Schritt des gleichmäßigen Walzens mindestens einen Zwischenrekristallisationsglühvorgang umfasst, der zwischen zwei aufeinanderfolgenden gleichmä-

**EP 3 094 756 B1**

ßigen Walzdurchgängen und/oder am Ende des gleichmäßigen Walzvorgangs vor dem flexiblen Kaltwalzen des Zwischenbands (3) erfolgt.

4. Herstellungsverfahren nach Anspruch 3, bei dem der Zwischenrekristallisationsglühvorgang beim Durchlauf in einem Zwischenglühofen mit einer Temperatur des Bands beim Zwischenglühvorgang von zwischen 850°C und 1200°C und einer Verweildauer im Zwischenglühofen von zwischen 30 Sekunden und 5 Minuten erfolgt.

5. Herstellungsverfahren nach einem der vorhergehenden Ansprüche, bei dem die Dicke ($E_c$) des Zwischenbands (3) gleich der zweiten Dicke (e), multipliziert mit einem Multiplikationskoeffizienten von zwischen 1,05 und 1,5 ist.

6. Herstellungsverfahren nach einem der vorhergehenden Ansprüche, bei dem die erste Dicke (e+s) gleich der zweiten Dicke (e), multipliziert mit einem Reduktionskoeffizienten von zwischen 1,05 und 1,5 ist.

7. Herstellungsverfahren nach einem der vorhergehenden Ansprüche, bei dem vor dem Schritt des gleichmäßigen Kaltwalzens das Ausgangsband (1) einem Homogenisierungsglühen der Mikrostruktur, insbesondere beim Durchlauf in einem Homogenisierungsglühofen für die Mikrostruktur mit einer Verweildauer im Homogenisierungsglühofen für die Mikrostruktur von zwischen 2 Minuten und 25 Minuten und einer Temperatur des Homogenisierungsglühofen für die Mikrostruktur von zwischen 850°C und 1200°C unterzogen wird.

8. Herstellungsverfahren nach einem der vorhergehenden Ansprüche, bei dem das Ausgangsband (1) aus einem Halbprodukt wie etwa einer Bramme oder einem Barren gewonnen wird, die bzw. der aus einer Legierung besteht, die im Lichtbogenofen oder Induktionsvakuumofen entstanden ist.

9. Herstellungsverfahren nach einem der vorhergehenden Ansprüche, bei dem die Dicke ($E_0$) des Ausgangsbands (1) zwischen 1,9 mm und 18 mm beträgt.

10. Verfahren nach einem der Ansprüche 1 bis 9, das nach dem Schritt des abschließenden Rekristallisationsglühens einen Schritt des Planarisierens des Bands (14) mit variabler Dicke umfasst.

11. Verfahren nach einem der Ansprüche 1 bis 10, bei dem die Legierung in Gewicht aufweist:

   34,5% ≤ Ni ≤ 42,5%
   0,15% ≤ Mn ≤ 0,5%
   0 ≤ Si ≤ 0,35%, vorzugsweise 0,1% ≤ Si ≤ 0,35%
   0,010 ≤ C ≤ 0,050%

   wahlweise:

   0 ≤ Co ≤ 20%
   0 ≤ Ti ≤ 0,5%
   0,01% ≤ Cr ≤ 0,5%

   wobei es sich bei dem Rest um Eisen und sich zwangsläufig aus der Verarbeitung ergebende Verunreinigungen handelt.

12. Verfahren zum Herstellen mindestens einer Blechplatte (12), Folgendes umfassend:

   - Umsetzen des Herstellungsverfahrens nach einem der Ansprüche 1 bis 11, um das Band (4) mit entlang seiner Länge variabler Dicke zu erhalten; und
   - Abschneiden des Bands (4) mit variabler Dicke, um mehrere Blechplatten (12) zu erhalten.

13. Verfahren nach Anspruch 12, bei dem das Abschneiden des Bands (4) mit variablen Dicken in den ersten Bereichen (7) erfolgt, wobei jede Blechplatte (12) durch einen Teil des Bands (4) mit variabler Dicke gebildet ist, der sich zwischen zwei aufeinanderfolgenden ersten Bereichen (7) befindet.

14. Verfahren zum Herstellen eines Teilstücks (18) eines kryogenen Rohrs, Folgendes umfassend:

   - Herstellen mindestens einer Blechplatte (12) durch Umsetzen des Herstellungsverfahrens nach Anspruch 13, wobei die Blechplatte (12) Längsränder aufweist, die sich entlang der Länge der Blechplatte (12) erstrecken; dann
- Aufrollen der Blechplatte (12) entlang ihrer Breite; und
- miteinander Verschweißen der Längsränder der aufgerollten Blechplatte (12), um ein Rohrteilstück (18) zu bilden.

15. Band (4) mit variabler Dicke, das durch das Herstellungsverfahren nach einem der Ansprüche 1 bis 11 erhalten werden kann, wobei das Band (4) mit variabler Dicke seiner Länge nach erste Bereiche (7), die eine erste Dicke (e+s) haben, und zweite Bereiche (10) hat, die eine zweite Dicke (e) haben, die kleiner ist als die erste Dicke (e+s), wobei das Band (4) mit variabler Dicke aus einer Legierung gefertigt ist, die in Gewicht aufweist:

$34{,}5\% \leq Ni \leq 53{,}5\%$
$0{,}15\% \leq Mn \leq 1{,}5\%$
$0 \leq Si \leq 0{,}35\%$, vorzugsweise $0{,}1\% \leq Si \leq 0{,}35\%$
$0 \leq C \leq 0{,}07\%$

wahlweise:

$0 \leq Co \leq 20\%$
$0 \leq Ti \leq 0{,}5\%$
$0{,}01\% \leq Cr \leq 0{,}5\%$

wobei es sich bei dem Rest um Eisen und sich zwangsläufig aus der Verarbeitung ergebende Verunreinigungen handelt.

16. Band (4) nach Anspruch 15, wobei die ersten Bereiche (7) eine erste mittlere Korngröße ($G1_{ASTM}$) haben, und die zweiten Bereiche (10) eine zweite mittlere Korngröße ($G2_{ASTM}$) haben, wobei die Differenz des Absolutwerts zwischen der ersten Korngröße ($G1_{ASTM}$) und der zweiten Korngröße ($G2_{ASTM}$) kleiner als oder gleich dem Index 0,5 nach der Norm ASTM E112-10 ist.

17. Band nach einem der Ansprüche 15 und 16, wobei die Legierung in Gewicht aufweist:

$34{,}5\% \leq Ni \leq 42{,}5\%$
$0{,}15\% \leq Mn \leq 0{,}5\%$
$0 \leq Si \leq 0{,}35\%$,
$0{,}010 \leq C \leq 0{,}050\%$

wahlweise:

$0 \leq Co \leq 20\%$
$0 \leq Ti \leq 0{,}5\%$
$0{,}01\% \leq Cr \leq 0{,}5\%$

wobei es sich bei dem Rest um Eisen und sich zwangsläufig aus der Verarbeitung ergebende Verunreinigungen handelt.

18. Blechplatte (12), die durch das Verfahren von Anspruch 12 oder 13 erhalten werden kann, wobei die Blechplatte (12) ihrer Länge nach mindestens einen ersten verstärkten Bereich (14), der eine erste Dicke (e+s) hat, und mindestens einen zweiten Bereich (13) hat, der eine zweite Dicke hat (e) hat, die kleiner ist als die erste Dicke (e+s), wobei die Blechplatte (12) aus einer Legierung gefertigt ist, die in Gewicht aufweist:

$34{,}5\% \leq Ni \leq 53{,}5\%$
$0{,}15\% \leq Mn \leq 1{,}5\%$
$0 \leq Si \leq 0{,}35\%$, vorzugsweise $0{,}1\% \leq Si \leq 0{,}35\%$
$0 \leq C \leq 0{,}07\%$

wahlweise:

$0 \leq Co \leq 20\%$
$0 \leq Ti \leq 0,5\%$
$0,01\% \leq Cr \leq 0,5\%$

wobei es sich bei dem Rest um Eisen und sich zwangsläufig aus der Verarbeitung ergebende Verunreinigungen handelt.

19. Blechplatte (12) nach Anspruch 18, wobei der erste verstärkte Bereich (14) eine erste mittlere Korngröße (G1$_{ASTM}$) hat, und der zweite Bereich (13) eine zweite mittlere Korngröße (G2$_{ASTM}$) hat, wobei die Differenz des Absolutwerts zwischen der ersten Korngröße (G1$_{ASTM}$) und der zweiten Korngröße (G2$_{ASTM}$) kleiner als oder gleich dem Index 0,5 nach der Norm ASTM E112-10 ist.

20. Blechplatte nach einem der Ansprüche 18 und 19, wobei die Legierung in Gewicht enthält:

$34,5\% \leq Ni \leq 42,5\%$
$0,15\% \leq Mn \leq 0,5\%$
$0 \leq Si \leq 0,35\%$
$0,010 \leq C \leq 0,050\%$

wahlweise:

$0 \leq Co \leq 20\%$
$0 \leq Ti \leq 0,5\%$
$0,01\% \leq Cr \leq 0,5\%$

wobei es sich bei dem Rest um Eisen und sich zwangsläufig aus der Verarbeitung ergebende Verunreinigungen handelt.

21. Rohrteilstück (18), das durch das Verfahren nach Anspruch 14 erhalten werden kann und aus einer Legierung gefertigt ist, die in Gewicht enthält:

$34,5\% \leq Ni \leq 53,5\%$
$0,15\% \leq Mn \leq 1,5\%$
$0 \leq Si \leq 0,35\%$, vorzugsweise $0,1\% \leq Si \leq 0,35\%$
$0 \leq C \leq 0,07\%$

wahlweise:

$0 \leq Co \leq 20\%$
$0 \leq Ti \leq 0,5\%$
$0,01\% \leq Cr \leq 0,5\%$

wobei es sich bei dem Rest um Eisen und sich zwangsläufig aus der Verarbeitung ergebende Verunreinigungen handelt, und dieses Teilstück einen zentralen zylindrischen Bereich (20) mit einer Dicke (e) aufweist, der von verstärkten zylindrischen Enden (22) umgeben ist, die in einem Stück mit dem zentralen Bereich (20) mit einer Dicke ausgebildet sind, die größer ist als die Dicke (e) des zentralen Bereichs (20).

22. Rohrteilstück (18) nach Anspruch 21, bei dem die Legierung in Gewicht aufweist:

$34,5\% \leq Ni \leq 42,5\%$
$0,15\% \leq Mn \leq 0,5\%$
$0 \leq Si \leq 0,35\%$
$0,010 \leq C \leq 0,050\%$

wahlweise:

$0 \leq Co \leq 20\%$
$0 \leq Ti \leq 0,5\%$

$$0,01\% \leq Cr \leq 0,5\%$$

wobei es sich bei dem Rest um Eisen und sich zwangsläufig aus der Verarbeitung ergebende Verunreinigungen handelt.

**23.** Einheit mit mindestens einer Blechplatte (12) nach einem der Ansprüche 18 bis 20 und einem an die Blechplatte (12) geschweißten Teil (16).

**24.** Einheit nach Anspruch 23, bei der das Teil (16) am ersten verstärkten Bereich (14) der Blechplatte (12) angeschweißt ist.

**25.** Einheit nach Anspruch 24, bei der das Teil (16) eine Blechplatte (12) nach einem der Ansprüche 18 bis 20 ist.

**Claims**

**1.** A method for manufacturing a strip having a variable thickness along its length, the strip being made of an alloy comprising by weight:

$$34.5\% \leq Ni \leq 53.5\%$$
$$0.15\% \leq Mn \leq 1.5\%$$
$$0 \leq Si \leq 0.35\%, \text{ preferably } 0.1\% \leq Si \leq 0.35\%$$
$$0 \leq C \leq 0.07\%$$

optionally:

$$0 \leq Co \leq 20\%$$
$$0 \leq Ti \leq 0.5\%$$
$$0.01\% \leq Cr \leq 0.5\%$$

the remainder being iron and impurities necessarily resulting from the elaboration,
the method successively comprising the following steps:

- providing an initial strip (1) of constant thickness ($E_0$), obtained by hot rolling;
- homogeneous cold rolling of the initial strip (1) along its length in order to obtain an intermediate strip (3) of constant thickness ($E_c$) along the rolling direction;
- flexible cold rolling of the intermediate strip (3) along its length in order to obtain a strip (4) of variable thickness along the rolling direction, the variable thickness strip (4) having along its length, first areas (7) having a first thickness (e+s) and second areas (10) having a second thickness (e), smaller than the first thickness (e+s),
- continuous final recrystallization annealing of the variable thickness strip (4) in a final annealing oven,

wherein the plastic deformation ratio generated, after an optional intermediate recrystallization annealing, by the steps of homogeneous cold rolling and of flexible cold rolling in the first areas (7) of the variable thickness strip (4) is greater than or equal to 30%,
and
in which the difference ($\Delta\tau$) between the plastic deformation ratio ($\tau_2$) generated, after an optional intermediate recrystallization annealing, by the steps of homogeneous cold rolling and of flexible cold rolling in the second areas (10) and the plastic deformation ratio ($\tau_1$) generated, after an optional intermediate recrystallization annealing, by the steps of homogeneous cold rolling and of flexible cold rolling in the first areas (7) of the variable thickness strip (4) is smaller than or equal to 13% if the thickness ($E_0$) of the initial strip (1) is strictly greater than 2 mm and smaller than or equal to 10% if the thickness ($E_0$) of the initial strip (1) is smaller than or equal to 2 mm.

**2.** The manufacturing method according to claim 1, wherein the final recrystallization annealing is carried out at a final annealing temperature comprised between 850°C and 1200°C and a dwelling time in the final annealing oven comprised between 20 seconds and 5 minutes, and preferably between 30 seconds and 3 minutes.

**3.** The manufacturing method according to one of claims 1 and 2, wherein the homogeneous rolling step comprises at least one intermediate recrystallization annealing carried out between two successive homogeneous rolling passes and/or at the end of the homogeneous rolling before flexible cold rolling of the intermediate strip (3).

4. The manufacturing method according to claim 3, wherein the intermediate recrystallization annealing is a continuous annealing carried out in an intermediate annealing oven with a temperature of the strip during intermediate annealing comprised between 850°C and 1200°C and a dwelling time in the intermediate annealing oven comprised between 30 seconds and 5 minutes.

5. The manufacturing method according to any of the preceding claims, wherein the thickness ($E_c$) of the intermediate strip (3) is equal to the second thickness (e) multiplied by a reduction coefficient comprised between 1.05 and 1.5.

6. The manufacturing method according to any of the preceding claims, wherein the first thickness (e+s) is equal to the second thickness (e) multiplied by a multiplication coefficient comprised between 1.05 and 1.5.

7. The manufacturing method according to any of the preceding claims, wherein before the homogeneous cold rolling step, the initial strip (1) undergoes a microstructure homogenization annealing, in particular a continuous annealing, in a microstructure homogenization annealing oven with a dwelling time in the microstructure homogenization annealing oven comprised between 2 minutes and 25 minutes and a temperature of the microstructure homogenization annealing oven comprised between 850°C and 1200°C.

8. The manufacturing method according to any of the preceding claims, wherein the initial strip (1) is obtained from a semi-finished product such as a slab or an ingot consisting of an alloy elaborated in an electric arc oven or a vacuum induction oven.

9. The manufacturing method according to any of the preceding claims, wherein the thickness ($E_0$) of the initial strip (1) is comprised between 1.9 mm and 18 mm.

10. The manufacturing method according to any of claims 1 to 9, which comprises, after the final recrystallization annealing step, a step for leveling the variable thickness strip (14).

11. The manufacturing method according to any of claims 1 to 10, wherein the alloy comprises by weight:

$34.5\% \leq Ni \leq 42.5\%$
$0.15\% \leq Mn \leq 0.5\%$
$0 \leq Si \leq 0.35\%$, preferably $0.1\% \leq Si \leq 0.35\%$
$0.010\% \leq C \leq 0.050\%$

optionally:

$0 \leq Co \leq 20\%$
$0 \leq Ti \leq 0.5\%$
$0.01\% \leq Cr \leq 0.5\%$

the remainder being iron and impurities necessarily resulting from the elaboration.

12. A method for manufacturing at least one blank (12), comprising:

- carrying out the manufacturing method according to any of claims 1 to 11, so as to obtain a strip (4) having a variable thickness along its length; and
- cutting the variable thickness strip (4) so as to obtain several blanks (12).

13. The method according to claim 12, wherein the cutting of the variable thickness strip (4) is carried out in the first areas (7), each blank (12) being formed of a portion of the variable thickness strip (4) located between two successive first areas (7).

14. A method for manufacturing a cryogenic tube segment (18), comprising:

- manufacturing at least one blank (12) by carrying out the manufacturing method according to claim 13, the blank (12) comprising longitudinal edges extending along the length of the blank (12); and then

- rolling up the blank (12) along its width; and
- welding together the longitudinal edges of the rolled up blank (12) in order to form a tube segment (18).

15. A variable thickness strip (4) which may be obtained by the manufacturing method according to one of claims 1 to 11, the variable thickness strip (4) having, along its length, first areas (7) having a first thickness (e+s) and second areas (10) having a second thickness (e) smaller than the first thickness (e+s), the variable thickness strip (4) being made of an alloy comprising by weight:

$34.5\% \leq Ni \leq 53.5\%$
$0.15\% \leq Mn \leq 1.5\%$
$0 \leq Si \leq 0.35\%$, preferably $0.1\% \leq Si \leq 0.35\%$
$0 \leq C \leq 0.07\%$

optionally:

$0 \leq Cos \leq 20\%$
$0 \leq Ti \leq 0.5\%$
$0.01\% \leq Cr \leq 0.5\%$

the remainder being iron and impurities necessarily resulting from the elaboration.

16. The strip (4) according to claim 15, the first areas (7) having a first average grain size ($G1_{ASTM}$) and the second areas (10)) having a second average grain size ($G2_{ASTM}$), the absolute value difference between the first grain size ($G1_{ASTM}$) and the second grain size ($G2_{ASTM}$) being less than or equal to 0.5 numbers according to the ASTM E112-10 standard.

17. The strip according to one of claims 15 and 16, the alloy comprising by weight:

$34.5 \leq Ni \leq 42.5\%$
$0.15\% \leq Mn \leq 0.5\%$
$0.1\% \leq Si \leq 0.35\%$
$0.010\% \leq C \leq 0.050\%$

optionally:

$0 \leq Cos \leq 20\%$
$0 \leq Ti \leq 0.5\%$
$0.01\% \leq Cr \leq 0.5\%$

the remainder being iron and impurities necessarily resulting from the elaboration.

18. A blank (12) which may be obtained by the method of claim 12 or 13, the blank (12) having, along its length, at least one first reinforced area (14) having a first thickness (e+s) and at least one second area (13) having a second thickness (e) smaller than the first thickness (e+s), the blank (12) being made of an alloy comprising by weight:

$34.5\% \leq Ni \leq 53.5\%$
$0.15\% \leq Mn \leq 1.5\%$
$0 \leq Si \leq 0.35\%$, preferably $0.1\% \leq Si \leq 0.35\%$
$0 \leq C \leq 0.07\%$

optionally:

$0 \leq Cos \leq 20\%$
$0 \leq Ti \leq 0.5\%$
$0.01\% \leq Cr \leq 0.5\%$

the remainder being iron and impurities necessarily resulting from the elaboration.

**19.** The blank (12) according to claim 18, the first reinforced area (14) having a first average grain size ($G1_{ASTM}$) and the second area (13) having a second average grain size ($G2_{ASTM}$), the absolute value difference between the first grain size ($G1_{ASTM}$) and the second grain size ($G2_{ASTM}$) being less than or equal to 0.5 numbers according to the ASTM E112-10 standard.

**20.** The blank according to one of claims 18 and 19, the alloy comprising by weight:

$34.5 \leq Ni \leq 42.5\%$
$0.15\% \leq Mn \leq 0.5\%$
$0.1\% \leq Si \leq 0.35\%$
$0.010\% \leq C \leq 0.050\%$

optionally:

$0 \leq Cos \leq 20\%$
$0 \leq Ti \leq 0.5\%$
$0.01\% \leq Cr \leq 0.5\%$

the remainder being iron and impurities necessarily resulting from the elaboration.

**21.** A tube segment (18) which may be obtained by the method according to claim 14, which is made of an alloy comprising by weight:

$34.5\% \leq Ni \leq 53.5\%$
$0.15\% \leq Mn \leq 1.5\%$
$0 \leq Si \leq 0.35\%$, preferably $0.1\% \leq Si \leq 0.35\%$
$0 \leq C \leq 0.07\%$

optionally:

$0 \leq Cos \leq 20\%$
$0 \leq Ti \leq 0.5\%$
$0.01\% \leq Cr \leq 0.5\%$

the remainder being iron and impurities necessarily resulting from the elaboration, and
which segment comprises a cylindrical central area (20) having a thickness (e) surrounded by cylindrical reinforced ends (22) formed in one piece with the central area (20) having a thickness greater than the thickness (e) of the central area (20).

**22.** The tube segment (18) according to claim 21, wherein the alloy comprises by weight:

$34.5 \leq Ni \leq 42.5\%$
$0.15\% \leq Mn \leq 0.5\%$
$0.1\% \leq Si \leq 0.35\%$
$0.010\% \leq C \leq 0.050\%$

optionally:

$0 \leq Cos \leq 20\%$
$0 \leq Ti \leq 0.5\%$
$0.01\% \leq Cr \leq 0.5\%$

the remainder being iron and impurities necessarily resulting from the elaboration.

**23.** An assembly comprising at least one blank (12) according to one of claims 18 to 20 and a part (16) welded to the blank (12).

**24.** The assembly according to claim 23, wherein the part (16) is welded to the first reinforced area (14) of the blank (12).

25. The assembly according to claim 24, wherein the part (16) is a blank (12) according to one of claims 18 to 20.

FIG.1

FIG.2

FIG.3

EP 3 094 756 B1

FIG.4

FIG.5

FIG.6

FIG.7